(19) **Europäisches Patentamt / European Patent Office / Office européen des brevets**

(11) **EP 4 640 856 A1**

(12) **EUROPEAN PATENT APPLICATION**
published in accordance with Art. 153(4) EPC

(43) Date of publication:
29.10.2025  Bulletin 2025/44

(21) Application number: 23907513.8

(22) Date of filing: 05.12.2023

(51) International Patent Classification (IPC):
$C22B\ 4/08^{(2006.01)}$  $C22B\ 1/02^{(2006.01)}$
$C22B\ 7/00^{(2006.01)}$  $C22B\ 1/26^{(2006.01)}$
$C22B\ 5/02^{(2006.01)}$  $H01M\ 10/54^{(2006.01)}$

(52) Cooperative Patent Classification (CPC):
C22B 1/02; C22B 1/26; C22B 4/08; C22B 5/02;
C22B 7/00; H01M 10/54; Y02W 30/84

(86) International application number:
PCT/KR2023/019932

(87) International publication number:
WO 2024/136227 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.12.2022  KR 20220179625

(71) Applicants:
• POSCO Holdings Inc.
  Pohang-si, Gyeongsangbuk-do 37859 (KR)
• POSCO Co., Ltd
  Pohang-si, Gyeongsangbuk-do 37859 (KR)

(72) Inventors:
• LEE, Juseung
  Pohang-si, Gyeongsangbuk-do 37859 (KR)
• KIM, Chun
  Pohang-si, Gyeongsangbuk-do 37859 (KR)
• HAN, Sangwoo
  Pohang-si, Gyeongsangbuk-do 37859 (KR)
• KIM, Wan-Yi
  Pohang-si, Gyeongsangbuk-do 37859 (KR)
• PARK, Joongkil
  Pohang-si, Gyeongsangbuk-do 37859 (KR)

(74) Representative: Pfenning, Meinig & Partner mbB
Patent- und Rechtsanwälte
Theresienhöhe 11a
80339 München (DE)

(54) **HIGH-TEMPERATURE REDUCTION DEVICE FOR WASTE BATTERY RECYCLING AND HEAT TRERATMENT METHOD FOR WASTE BATTERY RECYCLING**

(57)  The present invention relates to a high temperature reduction device for waste battery recycling and a heat treatment method for waste battery recycling, and high temperature reduction device includes: a charging portion that injects a raw material; a heating portion for heating the raw material injected from the charging portion; a cooling portion that cools a heat-treated product; and a discharge portion that discharges a reactant cooled from the cooling portion, wherein the heating portion includes: a preliminary heat treatment portion for performing preliminary heating to the raw material injected from the charging portion; and a high-temperature heat treatment portion for heating to a higher temperature than the preliminary heat treatment portion, and the high-temperature heat treatment includes a heat treatment portion that performs a heat treatment at a temperature of 1150 to 1400 °C.

EP 4 640 856 A1

# FIG. 1A

## Description

### [Technical Field]

The present invention relates to a waste battery, and more particularly it relates to a high temperature reduction device for waste battery recycling and a heat treatment method for waste battery recycling.

### [Background Art]

As demand for electric vehicles increases worldwide, the issue of disposal of waste batteries generated from such electric vehicles is emerging as a social problem. In the case of a lithium rechargeable battery, which is a main raw material of the waste battery, an organic solvent, an explosive material, and a heavy metallic material such as Ni, Co, Mn, and Fe are contained, but Ni, Co, Mn, and Li have great scarcity value as valuable metals, and a recovery and recycling process after the waste lithium secondary battery is disposed is emerging as an important research field.

For normal recycling of the waste battery, the waste battery of which the life span has expired is subjected to a process of crushing, grinding, gravity sorting, and magnetic sorting to extract black powder containing a mixture of a positive electrode material and a negative electrode material. The black powder contains, for example, oxides of nickel, cobalt, manganese, lithium, aluminum, and oxygen as positive electrode materials, and graphite and its mixtures, as well as some impurities such as aluminum and copper as negative electrode materials. A wet process and a dry process are mainly used as methods to recover a valuable metal from the black powder.

The wet process produces NiSO4, $CoSO_4$, MnSO4, and $Li_2CO_3$ through leaching, solvent extract, and lithium production. When the black powder is processed by the wet process, there is a problem that a leaching process time is excessive because graphite, which is a negative electrode material contained in the black powder, does not dissolve in a strong acid atmosphere, and there is a problem that the recovery is deteriorated because the black powder is separated together with the graphite.

However, the dry process is a process that removes aluminum from the slag through a high temperature dry process of the black powder, and may produce a Ni-Co-Mn-C alloy. The dry process utilizes graphite and oxygen injection at high temperatures, for example, in the range of 1400 to 1600 °C, to reduce Ni-Mn-Li-Al-O oxide in the black powder at high temperature to generate CO or $CO_2$ gas, which can be removed as Ni-Co-Mn alloy and lithium and aluminum in the slag.

After that, the separated Ni-Co-Mn alloy may undergo the same wet process. Since $NiSO_4$, $CoSO_4$, and $MnSO_4$ are produced and carbon is dissolved in the alloy through the leaching-solvent extraction process in the wet process, the leaching process time is reduced by about 70 % compared to the wet process.

However, in the process, not only are the valuable metals lithium and aluminum consumed as slag, but there is also a problem that it is not easy to recover the lithium. In addition, there is a problem that excessive oxidation carbon is generated due to the introduction of oxygen for graphite removal in the black powder used in the high temperature drying process, causing an environmental problem.

In order to solve the environmental problem, research is needed on a non-oxidation dry high temperature smelting reduction process that can minimize the generation of oxidation carbon, minimize the depletion of lithium, which is a valuable metal, and manufacture an Ni-Co-Mn alloy with carbon content of less than 10 %.

### [Disclosure]

### [Technical Problem]

A high temperature reduction device for waste battery recycling according to an embodiment provides an environment-friendly, non-oxidation dry high temperature reduction device that can secure optimal valuable metal recovery in post-process valuable metal recovery.

According to another embodiment, a heat treatment method for waste battery recycling is provided by utilizing a high temperature reduction device having the aforementioned advantages.

### [Technical Solution]

A high temperature reduction device for waste battery recycling according to an embodiment includes: a charging portion that injects a raw material; a heating portion for heating the raw material injected from the charging portion; a cooling portion that cools a heat-treated product; and a discharge portion that discharges a reactant cooled from the cooling portion, wherein the heating portion includes: a preliminary heat treatment portion for performing preliminary heating to the raw material injected from the charging portion; and a high-temperature heat treatment portion for heating to a higher temperature than the preliminary heat treatment portion, and the high-temperature heat treatment includes a heat treatment portion that performs a heat treatment at a temperature of 1150 to 1400 °C. In an embodiment, the high temperature heat treatment portion may include two or more heat treatment portions in a vertical or horizontal direction.

In an embodiment, the high temperature heat treatment portion may include: a heat-absorbing portion that performs heating at a temperature higher than the preliminary heat treatment portion; and a smelting portion that performs heating at a higher temperature range than the heat-absorbing portion to form at least a part of a smelting layer. In an embodiment, the heating portion that increases a temperature may increase a temperature of the raw material at 1 to 10 °C/min.

In an embodiment, the smelting portion may form a spherical shaped particle by smelting at least one of Ni, Cu, Co, and Mn. In an embodiment, a weight ratio (C/Ni) of carbon to nickel of the injected raw material may be 20 or more.

In an embodiment, the heating portion may include a heating furnace and a heating part, and when a temperature is measured at any position in the minor and major axis directions of a cross-section of the furnace with the center as the reference, a temperature difference between the center and the arbitrary position may be less than 250 °C. In an embodiment, a length ratio of the major axis to the minor axis of the cross-section of the heating furnace may be 2/1 to 4/1.

In an embodiment, the heating furnace may have a bent portion at an outer side of the heating furnace. In an embodiment, a length of the bent portion may be 30 mm or more. In an embodiment, the heating portion may include at least one or more heating parts, the heating part may have a coil shape, and a pitch interval between the coils may be decreased as farther away from a central region of the coil.

In an embodiment, the heating part may be disposed in at least a part of the heating portion. In an embodiment, a target temperature of the preliminary heat treatment portion in the heating portion may satisfy the following Equation1:

<Equation 1>

$$T_{111} \geq 0.813(x/(Cp \times m) + 25)$$

(in Equation 1, x denotes injected energy [W], Cp denotes a specific heat [J/Kg- °C], and m is a material transfer amount [Kg/s])

A target temperature of the preliminary heat treatment portion in the heating portion may satisfy the following Equation 2:

<Equation 2>

(in Equation 2, x denotes injected energy [W], Cp denotes a specific heat [J/Kg- °C], and m is a material transfer amount [Kg/s])

In an embodiment, the heating portion may be performed in an atmosphere with an oxygen partial pressure of less than 0.1 atm. In an embodiment, in the heating portion, the preliminary heat treatment portion may be heated at a temperature of 800 °C or less. In an embodiment, the heat-absorbing portion may generate an endothermic reaction through Boudouard reaction through which $CO_2$ gas is converted to 2CO.

As heat treatment process performed after a shredding process of a waste battery, a heat treatment method for waste battery recycling according to another embodiment includes: injecting a raw material; heating the injected the raw material; cooling a heat-treated product; and discharging a cooled reactant, wherein the heating the raw material may include: preheating the injected raw material and high temperature heat treatment for heating at a higher temperature than the preheating, and heat treatment of the raw material is performed at a temperature range of 1,150 to 1,400 °C in the high temperature heat treatment.

In an embodiment, the high temperature heat treatment may include: heat-absorbing for heating at a higher temperature than the preheating; and smelting for forming a smelting portion that forms at least a part of a melt layer by heating at a temperature range higher than the heat absorbing.

In an embodiment, in the heating the raw material, when a temperature at an arbitrary position in a minor axis direction and a major axis direction with reference to a center portion in a cross-section of a furnace, which is a heat applying member, is measured, a temperature difference between the center portion and the arbitrary position may be 250 °C or less.

In an embodiment, a length ratio of the major axis to the minor axis of the cross-section of the heating furnace may be 2/1 to 4/1. In an embodiment, the heating furnace may include a bent portion at an outer side of the heating furnace.

In an embodiment, a length of the bent portion may be 60 mm or more.

In an embodiment, the preheating the injected the raw material may be performed at a target temperature of Equation 1:

<Equation 1>

$$T111 \geq 0.813(x/(Cp \times m) + 25)$$

(in Equation 1, x denotes injected energy [W], Cp denotes a specific heat [J/Kg- °C], and m is a material transfer amount [Kg/s])

In an embodiment, a target temperature in the smelting for forming the at least a part of the melt layer by heating at a temperature range higher than the heat absorbing may satisfy Equation 2:

<Equation 2>

$$T113 \geq 0.4(x/(Cp \times m) + 700)$$

(in Equation 2, x denotes injected energy [W], Cp denotes a specific heat [J/Kg- °C], and m is a material transfer amount [Kg/s])

[Advantageous Effects]

A high temperature reduction device for waste battery recycling according to an embodiment provides a dry high temperature reduction device that is environment-friendly and can secure optimal valuable metal recovery in post-process valuable metal recovery by controlling a temperature in first to third zones within the heating portion and accompanying the structural features within the heating portion.

A heat treatment method for waste battery recycling is provided by utilizing the high temperature reduction device having the aforementioned advantages according to another embodiment.

**[Description of the Drawings]**

FIG. 1A illustrates a high temperature reduction device for waste battery recycling according to an embodiment, and FIG. 1B illustrates a high temperature reduction device 10' according to another embodiment.

FIG. 2A to FIG. 2C show photographs of the grain size formation of an alloy according to the C/Ni content of the raw material according to an embodiment.

FIG. 3A to FIG. 3C illustrate shapes of a reactant according to an embodiment and a comparative example, and FIG. 3D illustrates a temperature increasing speed and temperature distribution at edges according to a comparative example of the present invention.

FIG. 4 shows recovery of a reactant according to a temperature according to an embodiment and a comparative example.

FIG. 5 shows an arbitrary position in the cross-section of a heating furnace, with the center position as a reference, according to an embodiment.

FIG. 6 shows a temperature deviation in a heating furnace according to an embodiment and a comparative example.

FIG. 7 shows a temperature deviation in a heating furnace according to an embodiment and a comparative example.

FIG. 8A is a graph that shows a decreasing tendency of temperature deviation in a heating furnace according to the length of the bent portion according to an embodiment, and FIG. 8B shows the temperature deviation according to the length of the bent portion measured using thermal analysis simulation.

FIG. 9A to FIG. 9C illustrate a coil arrangement and a temperature distribution according to a comparative example and an embodiment of the present invention.

**[Mode for Invention]**

In the present specification, terms such as first, second, and third are used to describe various parts, components, regions, layers, and/or sections, but are not limited thereto. These terms are used only to distinguish one part, component, region, layer or section from another part, component, region, layer or se. Therefore, a first part, component, region, layer or section described below may be referred to as a second part, component, region, layer or section within the scope of the present invention.

Here, terminologies used herein are merely used to describe a specific exemplary embodiment, and are not intended to limit the present invention. A singular form used herein includes a plural form as long as phrases do not express a clearly opposite meaning. The term "include" used in the specification specifies specific characteristics, a specific area, a specific essence, a specific step, a specific operation, a specific element, and/or a specific ingredient, and does not exclude existence or addition of the other characteristics, the other area, the other essence, the other step, the other operation, the other element, and/or the other ingredient.

When it is mentioned that a first component is located "above" or "on" a second component, the first component may be located directly "above" or "on", or the second component or a third component may be interposed therebetween. In contrast, when it is mentioned that a first component is located "directly above" a second component, a third component is not interposed therebetween.

Although not otherwise defined, all terms used herein, including technical terms and scientific terms, have the same meanings as those generally understood by those skilled in the art to which the present invention pertains. Terms defined in a generally used dictionary are interpreted as meanings according with related technical documents and currently disclosed contents, and are not interpreted as ideal meanings or very formal meanings unless otherwise defined.

Hereinafter, an embodiment will be described in detail. However, this is provided as an example, and the present invention is not limited thereto, and the present invention is only defined by the scope of claims to be described later.

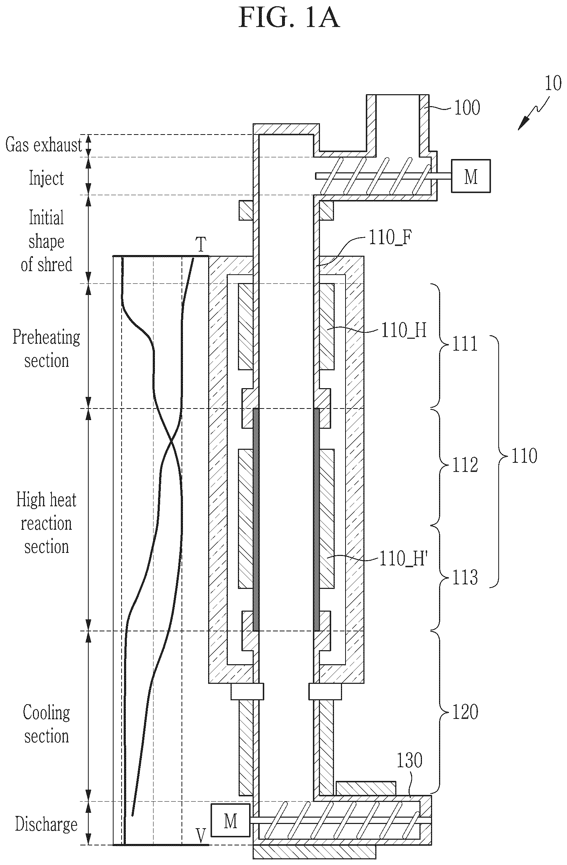

FIG. 1A illustrates a high temperature reduction device for waste battery recycling according to an embodiment.

Referring to FIG. 1A, a high temperature reduction device 10 for waste battery recycling according to an embodiment includes a charging portion 100 for charging a raw material, a heating portion 110 for heating the raw materials charged from the charging portion 100, a cooling portion 120 for cooling a heat-treated product, and a discharge portion 130 for discharging a cooled reactant from the cooling portion 120. **The** high temperature reduction device 10 of the present invention implies a heating furnace that can increase a temperature of a battery shred inserted therein to a high temperature, which is higher than the smelting point.

The high temperature reduction device 10 may shred the waste battery, and manufacture a reactant containing oxides of nickel, cobalt, manganese, lithium aluminum, or oxygen as a positive electrode material and graphite, which is a negative electrode material, and a mixture thereof, and some impurities such as aluminum and copper by high-temperature reducing a waste battery experienced through shredding, and gravity separation, magnetic separation, or classification separation as necessary.

The charging portion 100 is a member into which a raw material is input, and the raw material may be the waste battery shred described above. The waste battery shred refers to a material that becomes a base material for the battery shred, or the material itself that has been shredded. The base material of the battery shred may include a battery that has reached the end of its life span, a waste battery, and a waste material generated during a manufacturing process of a lithium ion battery.

Specifically, the waste battery may include a positive electrode material such as scrap, jelly roll, and slurry constituting the waste battery, a defective product generated during the manufacturing process, a residue within the manufacturing process, and generated debris. The base material of the battery shred may be manufactured into a battery shred through a shredding process. The material itself that has been shredded may be a shredded product itself, such as black powder. In this way, by recycling waste batteries, battery shred is manufactured, which is environment-friendly and economical.

In an embodiment, a weight ratio of C/Ni in the raw material may be greater than 20. The weight ratio of C/Ni implies a value obtained by dividing wt % of carbon by wt% of nickel. In an embodiment, when the weight ratio of C/Ni in the raw material satisfies the above-mentioned range, the size of the powder particle is reduced, and a spherical shape reactant having a particle size ratio in the range of 500 to 3,000 $\mu$m, which is the optimal particle size ratio for acid treatment in the subsequent process, may be formed. When the weight ratio of C/Ni in the raw material exceeds the above-stated range, a spherical shaped shred can hardly be formed, and reduction by carbon cannot be completely achieved because it is formed as a lump-like reactant.

In an embodiment, the charging portion 100 may further include a pusher. The pusher may be provided for more smooth injection of the raw material charged through the charging portion 100.

The heating portion 110 is a member for heating the raw material injected from the charging portion 100. The heating portion 110 may raise a temperature of the waste battery shred to a temperature higher than the smelting point by putting the raw material, such as waste battery shred, into a furnace that can raise the temperature to a high temperature. As described, through the heating portion 110, an Ni-Co-Mn alloy and an Li oxide including a valuable metal are generated, and thus the valuable metal can be recovered in a post-process.

In an embodiment, the heating portion 110 may be characterized by heating the raw material injected from the charging portion 100 at a temperature increasing speed of 1 to 10 °C/min. Specifically, the temperature increasing speed may be included in a range of about 2.0 to about 5.0 °C/min.

In an embodiment, the heating portion 110 may perform at a temperature range of about 800 to about 1,300 °C. As the heating is carried out with the temperature increasing speed and the temperature range, an Ni-based alloy is formed with spherical shape particles of 100 to 3,000 $\mu$m, thereby increasing a recovery rate of the valuable metal and Li.

Specifically, the heating portion 110 may include at least one or more conductive coils. Specifically, the heating portion 110 may include one conductive coil or may include one or more conductive coils. In FIG. 1A, one conductive coil is used for the preliminary heat treatment portion 111 and an additional conductive coil is used for a heat-absorbing portion 112 and a smelting portion 113.

In an embodiment, the heating portion 110 may include a preliminary heat treatment portion 111 for preliminarily heating the introduced raw material and a high temperature heat treatment portion (not shown) for heating to a temperature higher than the preliminary heat treatment portion 111. The high temperature heat treatment portion may be a high temperature reduction portion, which is a member that reduces the raw material by heating it to a temperature higher than the preliminary heat treatment portion 111. In an embodiment, the high temperature heat treatment portion may include two or more heat treatment portions in a vertical or horizontal direction.

In an embodiment, the high temperature heating portion may include a heat-absorbing portion 112 and a smelting portion 113 that heats at a higher temperature range than the heat-absorbing portion 112 to form at least a part of smelting layer. The heating portion 110 has the advantage of increasing the valuable metal recovery by including sections with different temperatures.

The preliminary heat treatment portion 111 may be heated at a temperature range of 800 °C or low. Specifically, the preliminary heat treatment portion 111 may be heated in a temperature range of 700 °C or low. The preliminary heat treatment portion 111 mainly aims to remove an electrolyte and a separator of the waste battery shred by preheating the waste battery shred, which is the raw material, in the aforementioned range.

The heat-absorbing portion 112 may be heated at a higher temperature range than the preliminary heat treatment portion 111. Specifically, the endothermic reaction may occur in a range of 700 to 1200 °C, particularly 700 to 900 °C, and more particularly 800 to 900 °C. Specifically, the heat-absorbing portion 112 may experience an endothermic reaction with a Boudouard reaction through converts $CO_2$ gas is converted into 2CO gas in the aforementioned temperature range. As the heat-absorbing portion 112 is included, the high temperature reduction device 10 may have an environment-friendly advantage by reducing carbon dioxide.

The smelting portion 113 may be heated at a higher temperature than the heat-absorbing portion 112. Specifically, it may be heated in a temperature range of 1400 °C or less, more specifically in a temperature range of 1,150 to 1,400 °C or less. In the smelting portion 113, any one metallic material of nickel, cobalt, manganese, and copper may be fused and arranged in a spherical shape. The smelting portion 113 is a member in which heat treatment is performed in the temperature range such that an Ni-Co-Mn alloy and an Li oxide containing valuable metals can be generated in the highest high-temperature reaction zone within the heating portion 110.

Specifically, the smelting portion 113 is a section in which the shreds, in which the positive electrode, negative electrode, or separator are reduced into a laminated form as a result of heat treatment performed in the aforementioned temperature range, are reduced into spherical grains (droplets) that are suitable for reaction in a post-process, such as a wet process, to extract a valuable metal.

As the smelting portion 113 is heated in the aforementioned temperature range, the Li recovery may satisfy a range of 40 % to 70 %, specifically, 55 % to 60 %, and the Ni-Co-Mn alloy may satisfy a range of 55 % to 95 %, specifically, 85 % to 95 %, and more specifically, 85 % to 90 %. The smelting portion 113 has a problem that the Li recovery becomes excessively low when the temperature range exceeds the upper limit of the aforementioned range, and has a problem that the Ni-Co-Mn alloy recovery becomes excessively low when the temperature range exceeds the lower limit of the aforementioned range. As such, the smelting portion 113 has the advantage of enhancing the recovery of the Ni-Co-Mn alloy and simultaneously enhancing the Li recovery by being performed in the aforementioned temperature range.

In an embodiment, the heating portion 110 includes a heating furnace 110_F and a heating part 110_H. The heating furnace 110_F means a passage through which the input raw material passes through the heating portion 110. The heating part 110_H means a member that applies heat energy to the heating furnace 110_F.

In the heating furnace 110_F, when a temperature is measured at any position in the minor and major axis directions of the cross-section of the heating furnace 110_F based on the center, a temperature difference between the center and the arbitrary position may be 250 °C or less. The cross-section of the heating furnace 110_F means a cut made in a direction opposite to a direction in which the raw material progresses, for example, a cross or perpendicular direction.

Specifically, the temperature difference may be a difference between the maximum temperature and the minimum temperature. When the temperature difference between the center and the arbitrary position exceeds the temperature range, heat transfer is not be uniform in the heating furnace 110_F, thereby causing a problem of deterioration of valuable metal recovery.

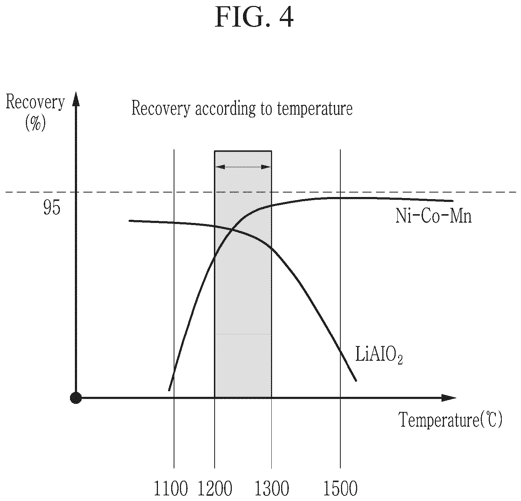

In an embodiment, in the cross-section of the heating furnace 110_F, when a circular cross-section of the same area is used as a 100 % reference, the temperature deviation at the center and the arbitrary position may be lower than 10 %. Specifically, the temperature deviation at the center and at any position may be as low as 20 % with respect to 100 % reference. This will be described in detail later with reference to FIG. 4.

In an embodiment, the cross-section of the heating furnace 110_F may have a length ratio of the major axis to the minor axis of 2/1 to 4/1. Specifically, the length ratio of the major axis to the minor axis may be 2.5/1 to 3.5/1.

As the length ratio of the major axis to the minor axis satisfies the above-mentioned range, the temperature range deviation in the heating furnace 110_F is low such that heat can be uniformly transferred. When the length ratio of the major axis to the minor axis exceeds the above-mentioned range, heat transfer is not be uniform in the heating furnace 110_F, thereby causing a problem of deterioration of valuable metal recovery in the reactant.

In an embodiment, the heating furnace 110_F may have a bent portion on the outside of the heating furnace 110_F. The bent portion means that a corner part of the quadrangular-shaped heating furnace 110_F in the cross-section has a curved shape. The bent portion prevents the heat energy from being concentrated at the corners, thereby preventing the problem of low recovery of reactant at the corners in the existing quadrangle-shaped heating furnace 110_F due to the heat energy being concentrated at the corners.

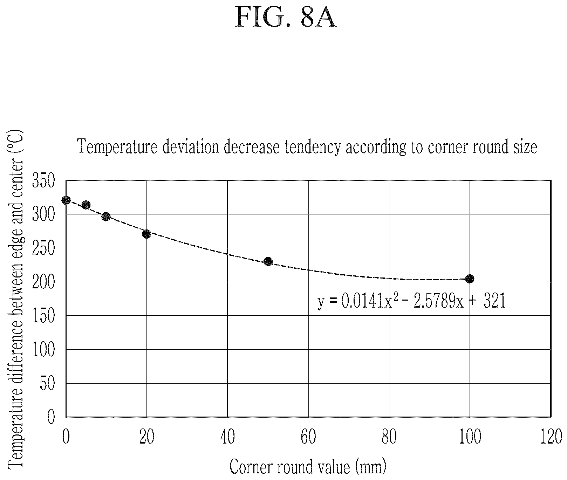

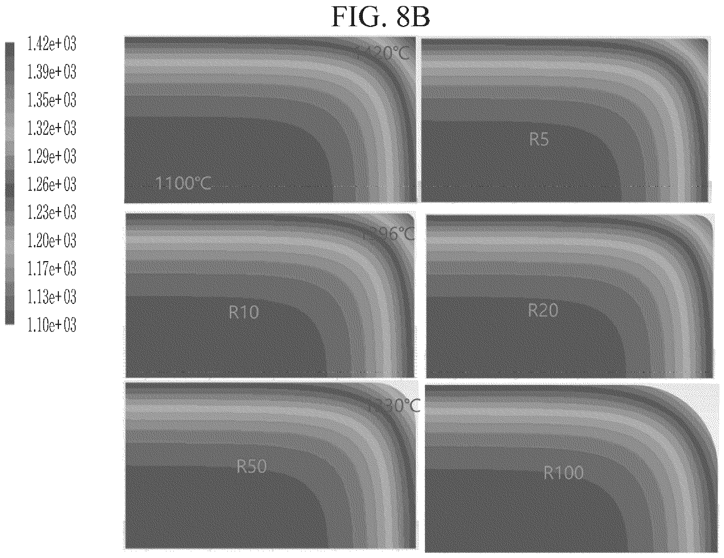

In an embodiment, a length of the bent portion may be 60 mm or more. Specifically, the length of the bent portion may be 60 mm to 110 mm, more specifically 75 mm to 100 mm. The length of the bent portion means the radius when the center circle is drawn with the corner part of the heating furnace as a reference, and a detailed description thereof will be described later with reference to FIG. 8A and FIG. 8B.

In an embodiment, the heating part 110_H is included at least one or more in the heating portion 110, and the heating part 110_H may apply heat energy by a method such as induction heating, gas heating, or resistance heating. In an embodiment, the heating part 110_H may have a coil shape as a means for supplying the heat energy. In an embodiment, the wire of the coil may have a cross-section of any one of the following shapes such as a circle, a square, a rectangle, an ellipse, a triangle, a trapezoid, a rhombus, and star, but this is not restrictive.

In an embodiment, the coil of the heating part 110_H may have a pitch separation distance that becomes narrower the farther away from the center region of the coil. The central region of the coil refers to a region that contains the median value when the length direction in which the coil is wound is used as a reference. The pitch of the coil refers to a distance between two effective coil sides when the coil is wound.

For induction heating, coil inductance is proportional to the number of rotations of the coil. Specifically, coil inductance is proportional to the number of turns of the coil. Specifically, when the coil is wound a plurality of times, the applied heat energy increases, and when the coil is wound a small number of times, the applied heat energy decreases.

By utilizing such a principle, the coil of the heating part 110_H of the present invention has an advantage in that the distance between the pitches of the coil becomes narrower as it becomes farther away from the center region of the coil, thereby dispersing the heat in the center region where the heat energy was previously concentrated. In an embodiment, the heating part 110_H is arranged in the preliminary heat treatment portion 111, the heat-absorbing portion 112, and the smelting portion 113, respectively, to control the temperature of the heating portion 110.

The heating portion 110 may be heated under a gas atmosphere containing oxygen, and the oxygen may be contained in a volume fraction of 5 vol % or less. In an embodiment, the heating portion 110 may be performed in an atmosphere having an oxygen partial pressure of 0.1 atm or less. As heating proceeds in a gas atmosphere containing some oxygen in the above-mentioned range, lithium oxide for lithium recovery may be easily formed, thereby improving the recovery of valuable metal.

In an embodiment, the preliminary heat treatment portion 111 within the heating portion 110 may be performed at an electric power of 12.0 kW or more. Specifically, the preliminary heat treatment portion 111 may be performed at an electric power of 12.0 to 15.0 kW. Specifically, the electric power may be performed at an electric power of 12.0 to 14 kW.

In an embodiment, the smelting portion 113 in the heating portion 110 may be performed at an electric power of 16.0 kW or more. Specifically, the electric power may be performed at an electric power of 16.0 to 19.0 kW. Specifically, the electric power may be performed at an electric power of 17.5 to 18.5 kW.

The electric power applied to the preliminary heat treatment portion 111 and the smelting portion 113 may mean the minimum energy required to heat the reactant, and the electric a satisfies the range, thereby enabling heat treatment to be performed in the target temperature range.

In an embodiment, the residence time of the reactant within the heating portion 110 may be 5 to 7 hours. The residence time may mean a value obtained by dividing the entire length of the heating portion 110 by a reactant movement distance per hour. For example, in the heating portion 110 that produces a reactant at 65 kg/hr, when the length of the heating portion 110 is 285 cm, the reactant moves at about 44 cm per hour and passes through the heating portion 110 after remaining in the heating portion 110 for about 6.5 hours.

When performed within the residence time of the heating portion 110, there is an advantage of improving the recovery of a valuable metal such as Li and Ni, Co, and Mn of the heating portion 110. When the residence time exceeds the above-mentioned range, not only is Li lost, but the particle size of the reduced valuable metal increases, which causes a problem in that the post-process leaching time becomes longer.

In an embodiment, the target temperature of the preliminary heat treatment portion 111 within the heating portion 110 may satisfy the following Equation 1.

<Equation 1>

$$T_{111} \geq 0.813(x/(Cp \times m) + 25)$$

(in Equation 1, x denotes an input energy [W], Cp denotes a specific heat [J/Kg- °C], and m denotes a material transfer amount [Kg/s])

In an embodiment, a target temperature of the smelting portion 113 within the heating portion 110 may satisfy the following Equation 2.

<Equation 2>

$$T_{113} \geq 0.4(x/(Cp \times m) + 700)$$

(in Equation 2, x denotes an input energy [W], Cp notes a specific heat [J/Kg- °C], and m denotes a material transfer amount [Kg/s])

Specifically, Equations 1 and 2 represent the target temperatures of the preliminary heat treatment portion 111 and the smelting portion 113 within the heating portion 110 and the minimum value of the supply energy of the reactant to be introduced. By inputting the minimum energy of Equations 1 and 2, the target temperatures of the preliminary heat treatment portion 111 and the smelting portion 113 may be reached. In an embodiment, x in Equation 1 may be greater than 12,000 W. In an embodiment, x in Equation 2 may be greater than 16,000 W.

By controlling the target temperature according to the supply energy of the reactant as in Equations 1 and 2, there is an advantage in that the recovery of a valuable metal such as Li, Ni, Co, and Mn can be improved. When heating is performed in a temperature range exceeding the ranges of Equations 1 and 2, there is a problem of deterioration of the valuable metal recovery.

The cooling portion 120 includes cooling the reactant generated through the heating portion 110 to 100 °C or less. The reactant may be a reduction reaction material generated through the heating portion 110. The cooling portion 120 may stabilize the reactant heated in the heating portion 110 as the cooling progresses in the above-mentioned range.

The discharge portion 130 is a member through which the reactant containing the valuable metal cooled through the cooling portion 120 is discharged. The reactant containing the valuable metal may be formed of a Ni-Co-based alloy, a lithium compound, carbon, and other residual impurity. The impurity may include, for example, Al, Cu, P, Na, Mg, and F.

In an embodiment, in the high temperature reduction device 10, the reactant recovered from the raw material may be greater than 60 % of the entire raw material. Specifically, before being put into the heating furnace, a weight of the waste battery shred may have a recovery of more than 60 to 65 % of the reactant after heat treatment. In an embodiment, after the heat treatment, Ni-Co in the reactant may be greater than 40 % of the entire weight.

The high temperature reduction device 10 may include a magnetic separation portion that magnetically separates an alloy recovered after cooling. The magnetic separation portion may be disposed in the discharge portion 130, or may be separately disposed from the discharge portion 130.

In an embodiment, the magnetic separation portion may magnetically separate a Ni-Co-based alloy with a magnetic field strength of 100 Gauss or greater. By performing magnetic separation at 100 Gauss or higher, there is an advantage in that a Co-based alloy having magnetism may be separated, thereby increasing the recovery of the valuable metal alloy.

In an embodiment, the discharge portion 130 may further include a stepped. The stepper may be, for example, a member having elastic force, and may be a means for more precisely and easily discharging the amount of reactant discharged from the discharge portion 130.

In an embodiment, the high temperature reduction device 10 may include at least one or more suction portions. The suction portion may be a member that controls gas concentration and heat and ventilation within the heating furnace. The suction portion may be disposed, for example, in an input portion, which is a front member of the heating portion 110, or in the cooling portion 120, which is a rear member of the heating portion 110.

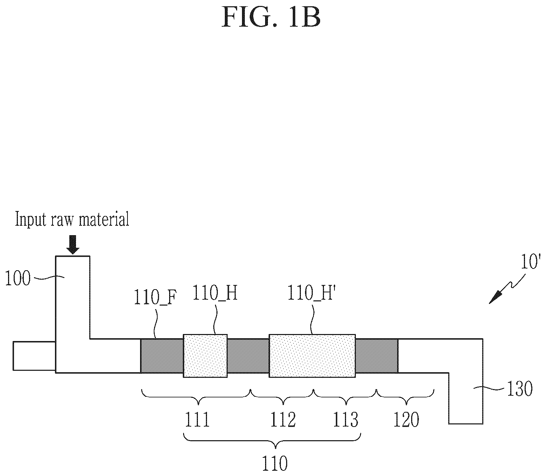

FIG. 1B illustrates a high temperature reduction device 10' according to another embodiment.

Referring to FIG. 1B, not as shown in FIG. 1A, a high temperature reduction device 10' may also be implemented in a horizontal form instead of a vertical form, and the configuration of the high temperature reduction device 10' is the same as that described above within a range that does not contradict it.

According to another embodiment, a high temperature reduction method for waste battery recycling is a heat treatment process performed after a waste battery crushing process, and may include charging a raw material, heating the charged raw material, cooling a heat-treated product, and discharging a cooled reactant.

In an embodiment, the heating the raw material may be performed by the heating portion 110 of the high temperature reduction device 10 described above, and the detailed description of which is the same as that described above within a range that does not contradict it.

The heating the raw material may include preheating the charged raw material, and high temperature heat treatment for heating the raw material to a temperature higher than the preheating.

In an embodiment, the high temperature heat treatment may include the heat absorbing and fusing for forming at least a part of a smelting layer by heating at a temperature range higher than the heat absorbing. The preheating, the heat absorbing, and the smelting may be performed by the preliminary heat treatment portion 111, the heat-absorbing portion 112, and the smelting portion 113 of the high temperature reduction device 10, respectively, and the detailed description thereof is the same as that described above within a range that does not contradict it.

The cooling the heat-treated product may be performed by the cooling portion 120 of the high temperature reduction device 10 described above, and the detailed description thereof is the same as that described above within a range that does not contradict it.

The discharging the cooled reactant may be performed by the discharge portion 130 of the high temperature reduction device 10 described above, and the detailed description thereof is the same as in the range described above without contradiction.

The following examples illustrate the present invention in more detail. However, the following embodiment is only a preferable embodiment and the present invention is not limited to the following embodiment.

**<Experimental Example>**

**<Condition of raw material charged into charging portion>**

The shred charged through the charging portion 100 of the present invention used a raw material that satisfies the following components and composition ratios.

(Table 1)

| Name | Component | Composition ratio [wt%] |
|---|---|---|
| Positive electrode material | Cathode | 30.8 |
| Negative electrode material | Graphite | 19.9 |
| Conductive material | Carbon Black | 2.1 |
| Binder | PVDF | 2.8 |
| Current collector | Copper | 15.3 |
| | Aluminum | 8.0 |
| PE, PP, PET | $C_2H_2$ | 4.4 |
| LiPF6 | - | 2.1 |
| Solvent | $C_3H_4O_3$ | 12.0 |
| PVDF | $C_2H_2F_2$ | 2.8 |
| Total | - | 100 |

Referring to Table 1, the shred composition data is shown in a component table of a waste battery shred used as an example for NCM622. Since Ni-Co-Mn in the battery shred is in an oxide state combined with oxygen, a reaction must be performed using C in the shred to reduce it. Therefore, it was confirmed that the ratio of C/Ni should be limited and input from the initial battery raw material. The following Table 2 shows results of evaluating the size of the alloy produced according to the C/Ni content.

(Table 2)

| Number | C/Ni [-] | Process temperature [°C] | Shred average size [mm] | Holding time over 1,050 °C [min] | Oxygen [%] | Alloy size [μm] | Remark |
|---|---|---|---|---|---|---|---|
| 1 | Less than 5 | 1,250 | 20 | 60 | <0.5 | lump >5000 | Comparative Example |

(continued)

| Number | C/Ni [-] | Process temperature [°C] | Shred average size [mm] | Holding time over 1,050 °C [min] | Oxygen [%] | Alloy size [μm] | Remark |
|---|---|---|---|---|---|---|---|
| 2 | More than 5 and less than 20 | 1,250 | 20 | 60 | <0.5 | powder particle (500-3000) | Comparative Example |
| 3 | More than 20 and less than 50 | 1,250 | 20 | 60 | <0.5 | powder particle (100-3000) | embodiment |
| 4 | More than 50 and less than 150 | 1,250 | 20 | 60 | <0.5 | powder particle (75-1000) | embodiment |
| 5 | More than 150 and less than 200 | 1,250 | 20 | 60 | <0.5 | powder particle (75-1000) | embodiment |
| 6 | More than 200 | 1,250 | 20 | 60 | <0.5 | powder particle (75-1000) | embodiment |

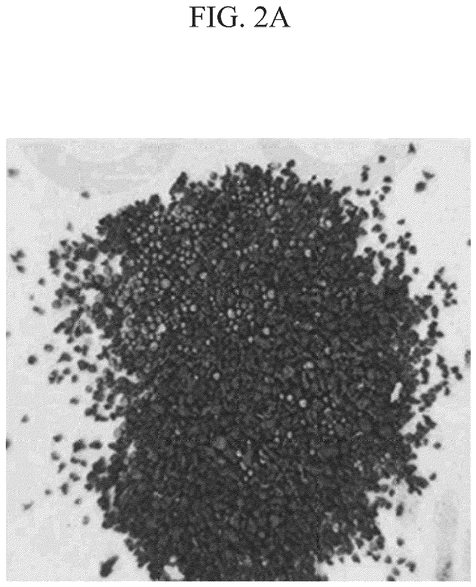

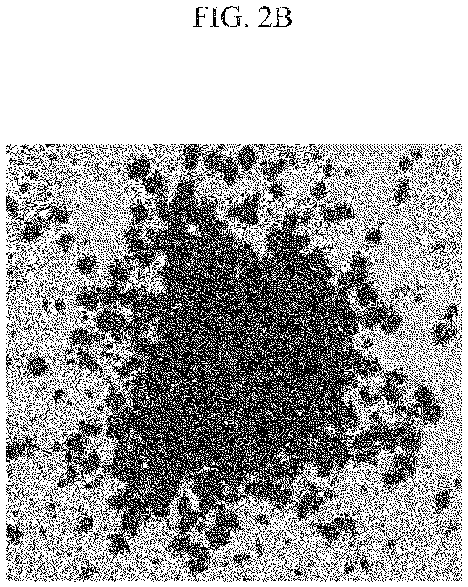

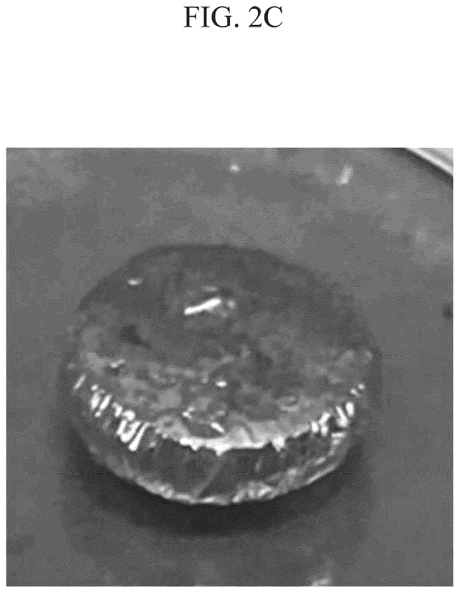

FIG. 2A to FIG. 2C show photographs of the grain size formation of an alloy according to the C/Ni content of the raw material according to an embodiment. FIG. 2A to FIG. 2C show the grain size formation data of the alloy when the C/Ni ratio is 100, 20, and 5, respectively. In FIG. 2A to FIG. 2C, a process temperature was 1,250 °C, an average shred size was 20 mm, a holding time was 60 minutes above 1,050 °C, and oxygen was maintained below 0.5 %, and only the C/Ni ratio was controlled. As shown in FIG. 2C, when the C/Ni ratio was less than 5, it appeared as a lump of 5,000 μm or more, and as shown in FIG. 2A and FIG. 2B, when C/Ni ratio was 20 or more, it appeared in the form of powder-like particles.

Specifically, it was confirmed that the higher the C/Ni, the smaller the powder particle size. For acid treatment in the post-process, the optimal particle size ratio is 75 to 3,000 μm, and therefore the C/Ni ratio of the raw material in the present invention is appropriately 20 or more. When the ratio is less than 20, the C content is excessively low in the shred, and thus even if a Ni-based alloy is formed, it is difficult to form a shred with a spherical shape of 3,000 μm or less due to wettability by C, and there is a problem that it is formed as a lumpy reactant and reduction is not completely achieved by carbon.

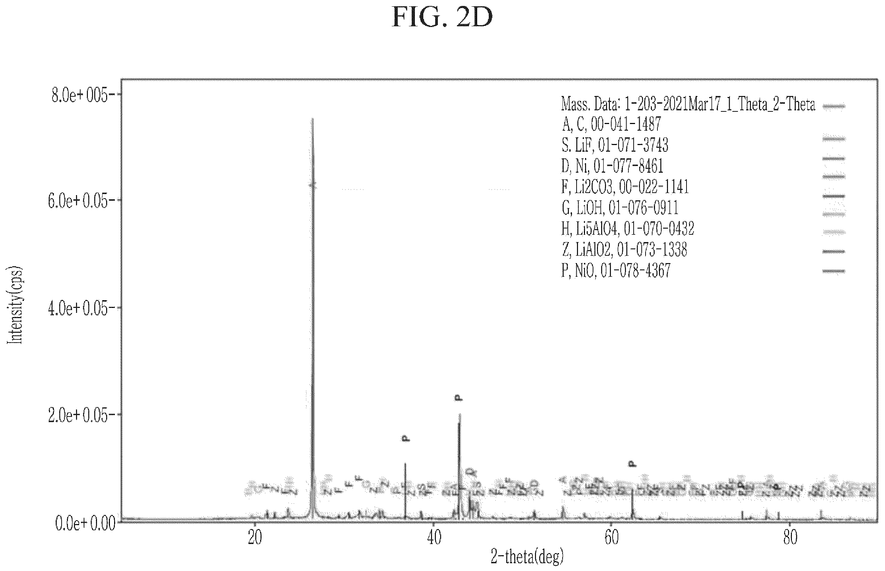

FIG. 2D shows XRD data of a reduced reactant according to a comparative example of the present invention.

Referring to FIG. 2D, XRD data for the reactant reduced to a C/Ni weight ratio of 20 or less is shown. In this case, it was confirmed that some materials were not reduced and some of the Ni-based material was maintained in the form of NiO.

**<Reactant shape according to temperature rise inside the heating furnace and temperature condition>**

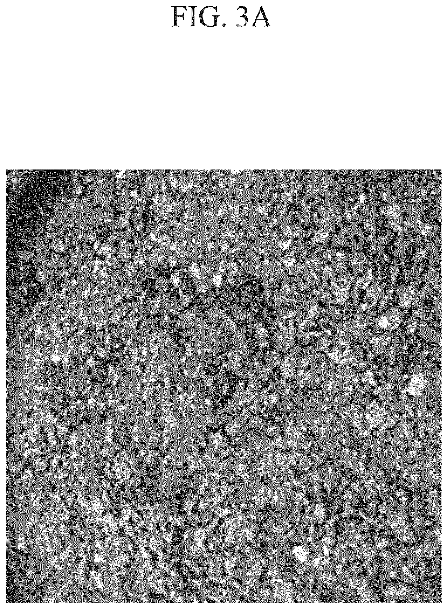

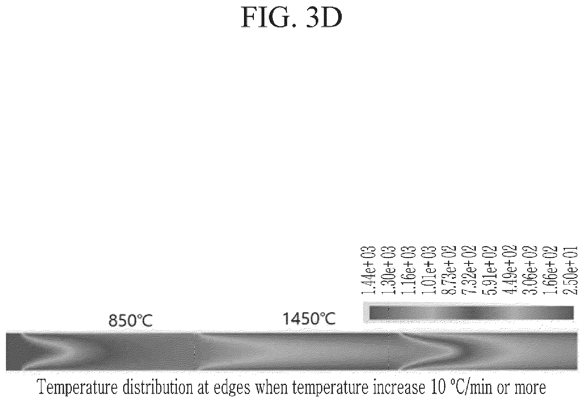

FIG. 3A to FIG. 3C illustrate shapes of a reactant according to an embodiment and a comparative example, and FIG. 3D illustrates a temperature increasing speed and temperature distribution at edges according to a comparative example of the present invention.

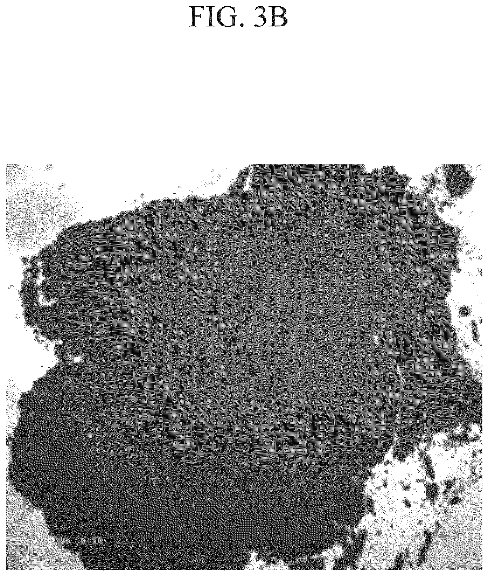

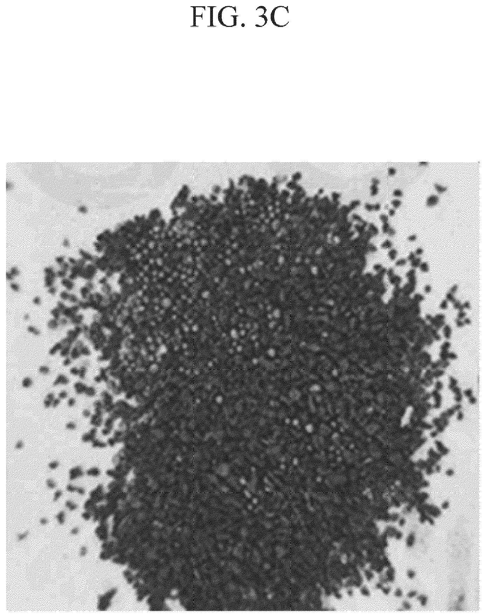

FIG. 3A shows the shape of a reactant formed when a central temperature inside the heating furnace is a low temperature of 1,150 °C or less and a temperature increasing speed is 3 °C/min, FIG. 3B shows the shape of a reactant formed when a central temperature inside the heating furnace is approximately 1,200 °C and a temperature increasing speed is 1 °C/min, and FIG. 3C shows the shape of a reactant formed when a central temperature inside the heating furnace is approximately 1,250 °C and a temperature increasing speed is 3 °C/min.

Referring to FIG. 3A, at a low temperature below 1,150 °C at a center inside the heating furnace, an NCM alloy and internal Li-Al-O formation were clumped together and existed in the form of flakes of 3,000 μm or larger. In this case, it was not easy to separate and recover NCM and Li-Al-O.

Referring to FIG. 3B and FIG. 3C, it was confirmed that the flake existed as an alloy in the form of powder or spherical shape when the central temperature inside the heating furnace was in the range of 1,150 to 1,400 °C, which is the smelting temperature of Cu or Ni.

Specifically, referring to FIG. 3B, it was confirmed that when the temperature increasing speed was 1 °C/min or less below 1,200 °C, the flakes were not formed into a spherical shape, but rather formed into a powder of 100 μm or less.

In this case, after NCM and Li-Al-O exist together, Li-Al-O remains as oxide for a long time and breaks into small pieces, and it is determined that NCM exists while attached together. Accordingly, NCM cannot clump together and exists in powder form. When the NCM exists in powder form, there is a problem that C or Li-Al-O particulates are selected together during the subsequent magnetic separation process, and the problem is caused by a decrease in recovery.

Referring to FIG. 3C, when the central temperature inside the heating furnace was in a range of 1,250 °C and the temperature increasing speed was 10 °C/min or less, specifically, about 3 °C/min, it was confirmed that a Ni-based alloy was formed with spherical shape particles of 100 to 3,000 $\mu$m.

Referring to FIG. 3D, it was confirmed that there was a problem in which the temperature in a bent portion of the heating portion increased to over 1,400 °C because high electric power had to be used at a temperature increasing speed of 10 °C/min or more. Thus, in the preliminary heat treatment portion and the high temperature heat treatment portion of the present invention, the temperature increasing speed can satisfy the aforementioned content, and specifically, it was confirmed that the temperature increasing speed can satisfy the aforementioned range when the internal temperature of the center of the heat treatment is in the range of 700 to 1,250 °C.

**<Li and NCM alloy recovery of reactant according to internal temperature of heating furnace>**

FIG. 4 shows recovery of a reactant according to a temperature according to an embodiment and a comparative example.

Referring to FIG. 4, it shows recovery of Ni-Co-Mn and LiAlO2 according to temperature, and it was confirmed that the recovery of Ni-Co-Mn and LiAlO2 were simultaneously excellent in the range of 1100 to 1500 °C, specifically, 1200 to 1300 °C. It was confirmed that there was a problem of excessive deterioration of the recovery of $LiAlO_2$ in the range of 1500 °C or higher, and there was a problem of excessive deterioration of the recovery of Ni-Co-Mn in the range of 1100 °C or lower.

It was confirmed that the high temperature reduction device of the present invention affects the recovery of Ni-Co-Mn alloy and Li, which are main constituent materials, depending on the temperature condition of the material generated through heating, particularly the temperature condition of the smelting portion or smelting step described above.

The following Table 3 shows lithium recovery and NC alloy recovery according to the temperature condition of the smelting portion.

(Table 3)

| Temperature [°C] | Li recovery [%] | NCM alloy recovery [%] | Remark |
|---|---|---|---|
| 1,100 | 80 | 5 | Comparative Example |
| 1,150 | 70 | 55 | Embodiment |
| 1,200 | 60 | 85 | Embodiment |
| 1,300 | 55 | 90 | Embodiment |
| 1,400 | 40 | 95 | Embodiment |
| 1,500 | 15 | 95 | Comparative Example |

Referring to Table 3, it was confirmed that not only the recovery of the valuable metal NCM alloy but also the recovery of Li was excellent in the temperature range of 1,150 to 1,400 °C, specifically, 1,200 to 1,300 °C, in the smelting portion or smelting step.

**<Temperature deviation by position in the cross-section of the heating furnace>**

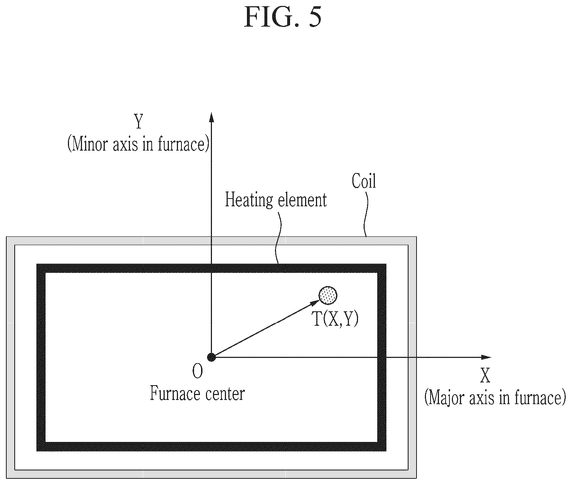

FIG. 5 shows an arbitrary position in the cross-section of a heating furnace, with the center position as a reference, according to an embodiment.

Referring to FIG. 5, a temperature T (X, Y) at an arbitrary position (X, Y) is represented with a central position O as a reference in the cross-section of a heating furnace. Specifically, the cross-section of the heating furnace means a cut in a direction perpendicular to a direction in which the raw material progresses.

Since it is heated by an external heating body, a temperature at the center will appear to be the lowest in the cross-section of the furnace, and a temperature at the outermost part of the furnace closest to the heating body will appear to be the highest. The shape of a conventional furnace is most commonly a circular shape, but in the furnace shape design of the present invention, a length and width ratio of the heating furnace is adjusted to a ratio that shows the minimum temperature deviation.

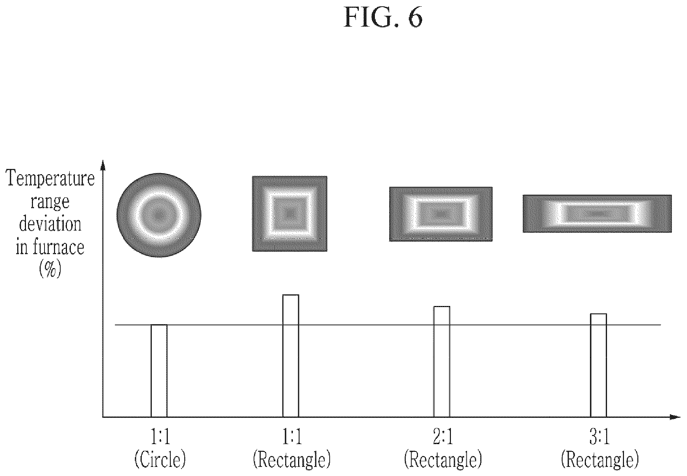

FIG. 6 shows a temperature deviation in a heating furnace according to an embodiment and a comparative example.

Referring to FIG. 6, a length ratio of the horizontal and vertical directions of the heating furnace shows a change in temperature deviation according to the length ratio of the major axis direction (X) and the minor axis direction (Y) in the same area, assuming that the temperature deviation of a circular-shaped furnace is 100 %. Specifically, when the cross-section of the heating furnace has the shape of a quadrangle and the length ratio of the minor axis direction decreases compared to the length ratio of the major axis direction, the temperature deviation should gradually decrease, but there is a problem that the temperature is high at the corner, resulting in low recovery of the reactant at the corner.

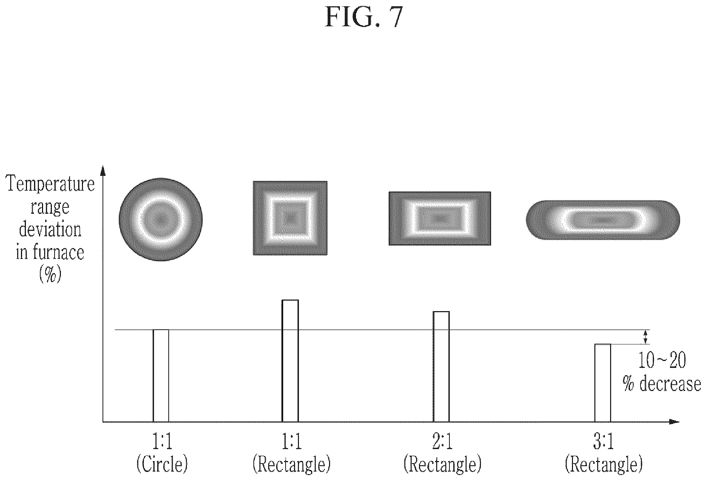

FIG. 7 shows a temperature deviation in a heating furnace according to an embodiment and a comparative example.

Referring to Fig. 7, when a length ratio of the major axis to the minor axis of the cross-section of the heating furnace is 3:1, it was confirmed that corners of an outer surface of the heating furnace have a portion bent at a predetermined angle rather than a sharp shape, thereby preventing heat from being concentrated at the corners. Accordingly, in the case of a heating furnace having a length ratio of the major axis to minor axis of the cross-section including a bent portion of 3:1, it was confirmed that the temperature deviation was lower compared to when it was circular.

FIG. 8A is a graph that shows a decreasing tendency of temperature deviation in a heating furnace according to the length of the bent portion according to an embodiment, and FIG. 8B shows the temperature deviation according to the length of the bent portion measured using thermal analysis simulation.

Referring to FIG. 8A, it may be confirmed that as the length of the bent portion increases, the temperature deviation decreases, and specifically, when the length of the bent portion is 60 mm or more, specifically 80 mm or more, and more specifically 100 mm or more, it may be confirmed that the temperature difference between the periphery and the center converges to 200 °C.

Referring to FIG. 8B, when the length of the bent portion is less than 50 mm, it may be confirmed that heat is concentrated near the bent portion, and when the length of the bent portion is 100 mm, it may be confirmed that there is no region where heat is concentrated near the bent portion, and the temperature inside the heating furnace has a uniform heat distribution.

### <Control of coil pitch in induction heating>

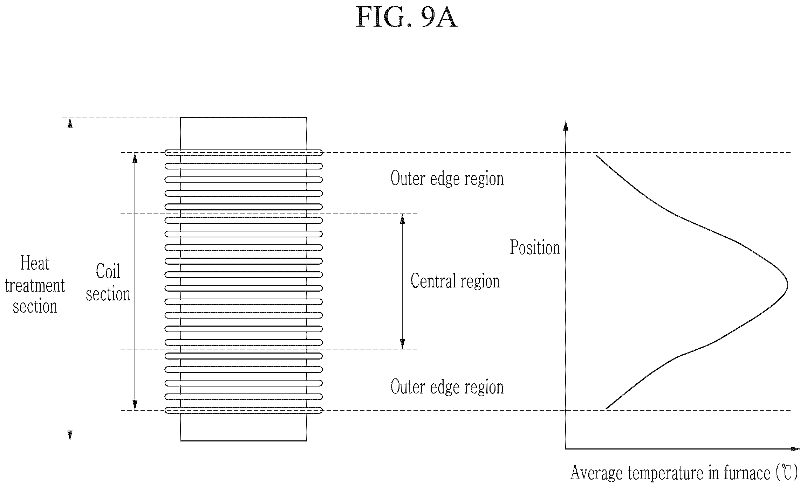

FIG. 9A to FIG. 9C illustrate a coil arrangement and a temperature distribution according to a comparative example and an embodiment of the present invention.

Referring to FIG. 9A, when induction heating is used as a heating part to apply heat to the heating furnace in the heating portion, it is confirmed that the average temperature inside the heating furnace is different depending on a pitch interval of coils for induction heating. Specifically, it is confirmed that an average temperature in a central region of the coil has the maximum temperature.

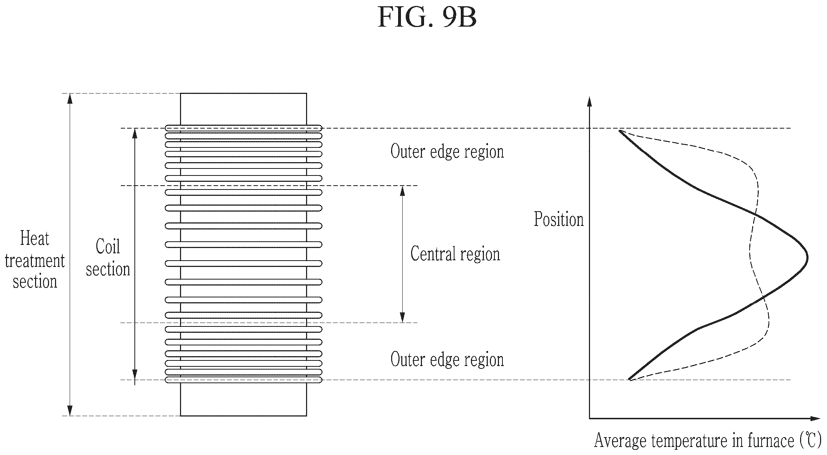

Referring to FIG. 9B, it may be confirmed that the pitch interval of the coil becomes narrower as the coil moves away from the center of the heating furnace. Specifically, when comparing the central region of the coil and an outer region of the coil, it may be confirmed that the pitch interval of the coil in the outer region is dense.

As such, since the pitch interval of the coil is dense in the outer region and loose in the central region, the temperature of the central region, where the heat is concentrated and the average temperature is high in FIG. 9A, is dispersed to the outer region, and thus it is confirmed that a difference in the average temperatures of the central region and the outer region is small, thereby heating with uniform temperature.

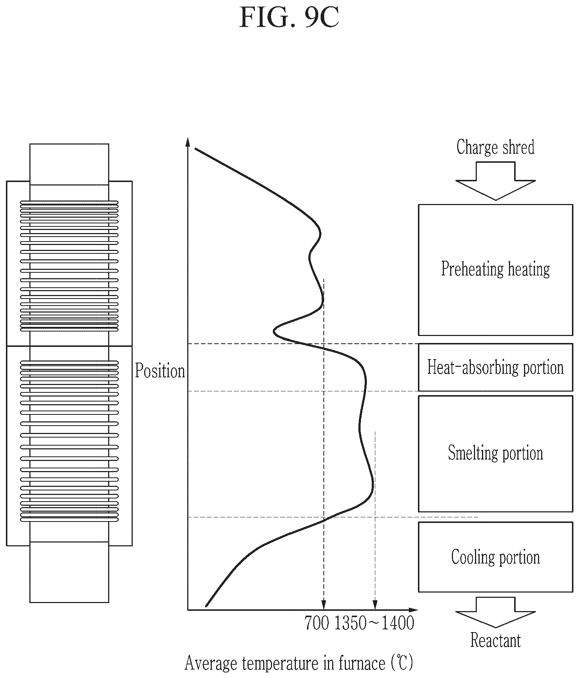

Referring to FIG. 9C, in the preliminary heat treatment portion, the heat-absorbing portion, and the smelting portion where the heating part is arranged in the present invention, it is confirmed that a problem of a large difference in the average temperature of the heating portion can be prevented by controlling a pattern of the pitch interval of the coil, which is the heating part, differently in the central region and the outer region as in FIG. 9B.

### <Heating body required energy - minimum energy for target temperature control of heating portion>

In order to reach a target temperature Y (preliminary heating portion: 700 °C, smelting portion: 1,150 to 1,400 °C) of a preheating section and a heat treatment section of the reactant moving at 65 kg per hour in the heating portion, the heating body supply energy (preliminary heat treatment portion: 12 kW, smelting portion 18 kW) that needs be supplied must be satisfied to reach the desired target temperature. The following equation represents the relationship between the minimum energy required for the heating body when heating the heating furnace and the target temperature. In the equation, a denotes a constant for efficiency, and is less than 1 at temperatures below 700 degrees, which is a temperature before the start of the Boudouard reaction, and changes to 0.4 at a temperature above the Boudouard reaction temperature. It has a coefficient of 0.2 to 1 depending on the target temperature condition of Y. Cp denotes a specific heat (J/Kg-°C), m denotes a material transport rate (Kg/s) with a range of 60 to 70 Kg/s, x denotes an electric power [W] value, which is the minimum energy to reach the smelting temperature, and Ti denotes an initial temperature, which is a room temperature in the case of preheating, and high temperature heating for smelting is targeted for the final temperature of preheating.

Target temperature Y of preliminary heat treatment portion = a (x/(Cp*m) + Ti)  <Equation 1>

For example, a minimum heat input for the target temperature is calculated as follows. Here, Cp is set to 800J/Kg-°C, m is set to 65Kg/hr, and Ti is set to 25°C. In this case, the equation may be changed as follows. The target temperature of the preliminary heat treatment portion is referenced to 700 degrees, which is the starting temperature of the Boudouard reaction, and the target temperature of the smelting processor is referenced to 1,150 degrees, which is the minimum temperature for the reaction.

Target temperature Y of preliminary heat treatment portion = 0.813  (x/(Cp×m) + 25);  <Equation 1>

<Equation 2>

Target temperature Y of smelting portion = 0.4 (x/(Cp×m) + 700);

The following Table 4 shows a reactant temperature according to the preliminary heat treatment portion and the minimum energy (kW) required to heat a raw material of the reactant. Specifically, Table 4 indicates a minimum value of a theoretical value considered in the heating portion.

(Table 4)

| Number | Section | Electric power [kW] | Central temperature of reactant | Remark |
|---|---|---|---|---|
| 1 | Preliminary heat treatment portion | 8 | 475 | Comparative Example |
| 2 | Preliminary heat treatment portion | 10 | 587 | Comparative Example |
| 3 | Preliminary heat treatment portion | 12 | 700 | Embodiment |
| 4 | Smelting portion | 12 | 1032 | Comparative Example |
| 5 | Smelting portion | 14 | 1087 | Comparative Example |
| 6 | Smelting portion | 16 | 1150 | Embodiment |
| 7 | Smelting portion | 25.4 | 1400 | Embodiment |

Referring to Table 4, for the preliminary heating portion, it is confirmed that the center temperature of the reactant needs be secured at approximately 700 degrees as a starting temperature range for the reduction reaction, and specifically, the electric power, which is the energy required to heat the raw material, which is the heating body, needs be 12 kW or more. In the case of the smelting portion, since the raw material contains a lot of graphite, it is confirmed that at least 16 kW of electric power needs to be applied to reach the target temperature because the endothermic reaction by the Boudouard reaction that converts oxidation carbon into carbon monoxide needs to be considered. However, this is the minimum theoretical value to reach the target temperature, and the amount of electric power that must be applied to the actual reaction must be greater than this.

Although the preferred embodiments have been described in detail above, the scope of the present invention is not limited thereto, and various modifications and improvements made by those skilled in the art using the basic concepts defined in the following claims also fall within the scope of the present invention.

**Claims**

1.  A high temperature reduction device for waste battery recycling comprising:

a charging portion that injects a raw material;
a heating portion for heating the raw material injected from the charging portion;

a cooling portion that cools a heat-treated product; and
a discharge portion that discharges a reactant cooled from the cooling portion,
wherein the heating portion includes:

a preliminary heat treatment portion for performing preliminary heating to the raw material injected from the charging portion; and
a high-temperature heat treatment portion for heating to a higher temperature than the preliminary heat treatment portion, and
the high-temperature heat treatment includes a heat treatment portion that performs a heat treatment at a temperature of 1150 to 1400 °C.

2. The high temperature reduction device for waste battery recycling of claim 1, wherein:
the high temperature heat treatment portion comprises two or more heat treatment portions in a vertical or horizontal direction.

3. The high temperature reduction device for waste battery recycling of claim 1, wherein:
the high temperature heat treatment portion comprises:

a heat-absorbing portion that performs heating at a temperature higher than the preliminary heat treatment portion; and
a smelting portion that performs heating at a higher temperature range than the heat-absorbing portion to form at least a part of a smelting layer.

4. The high temperature reduction device for waste battery recycling of claim 1, wherein:
the heating portion that increases a temperature increases a temperature of the raw material at 1 to 10 °C/min.

5. The high temperature reduction device for waste battery recycling of claim 3, wherein:
the smelting portion forms a spherical shaped particle by smelting at least one of Ni, Cu, Co, and Mn.

6. The high temperature reduction device for waste battery recycling of claim 1, wherein:
a weight ratio (C/Ni) of carbon to nickel of the injected raw material is 20 or more.

7. The high temperature reduction device for waste battery recycling of claim 1, wherein:

the heating portion comprises a heating furnace and a heating part, and
when a temperature is measured at any position in the minor and major axis directions of a cross-section of the furnace with the center as the reference,
a temperature difference between the center and the arbitrary position is less than 250 °C.

8. The high temperature reduction device for waste battery recycling of claim 7, wherein:
a length ratio of the major axis to the minor axis of the cross-section of the heating furnace is 2/1 to 4/1.

9. The high temperature reduction device for waste battery recycling of claim 1, wherein:
the heating furnace has a bent portion at an outer side of the heating furnace.

10. The high temperature reduction device for waste battery recycling of claim 9, wherein:
a length of the bent portion is 30 mm or more.

11. The high temperature reduction device for waste battery recycling of claim 1, wherein:

the heating portion comprises at least one or more heating parts,
the heating part has a coil shape, and
a pitch interval between the coils is decreased as farther away from a central region of the coil.

12. The high temperature reduction device for waste battery recycling of claim 11, wherein:
the heating part is disposed in at least a part of the heating portion.

13. The high temperature reduction device for waste battery recycling of claim 1, wherein:

a target temperature of the preliminary heat treatment portion in the heating portion satisfies the following Equation1:

<Equation 1>

$$T_{111} \geq 0.813(x/(Cp \times m) + 25)$$

(in Equation 1, x denotes injected energy [W], Cp denotes a specific heat [J/Kg- °C], and m is a material transfer amount [Kg/s])

14. The high temperature reduction device for waste battery recycling of claim 13, wherein:
    in Equation 1, x is 12,000 W or more.

15. The high temperature reduction device for waste battery recycling of claim 3, wherein:
    a target temperature of the preliminary heat treatment portion in the heating portion satisfies the following Equation 2:

<Equation 2>

$$T_{113} \geq 0.4(x/(Cp \times m) + 700)$$

(in Equation 2, x denotes injected energy [W], Cp denotes a specific heat [J/Kg- °C], and m is a material transfer amount [Kg/s])

16. The high temperature reduction device for waste battery recycling of claim 15, wherein:
    in Equation 2, x is 16,000 W or more.

17. The high temperature reduction device for waste battery recycling of claim 1, wherein:
    the heating portion is performed in an atmosphere with an oxygen partial pressure of less than 0.1 atm.

18. The high temperature reduction device for waste battery recycling of claim 1, wherein:

    in the heating portion,
    the preliminary heat treatment portion is heated at a temperature of 800 °C or less.

19. The high temperature reduction device for waste battery recycling of claim 3, wherein:

    in the heating portion,
    the heat-absorbing portion generates an endothermic reaction through Boudouard reaction through which $CO_2$ gas is converted to 2CO.

20. As heat treatment process performed after a shredding process of a waste battery, a heat treatment method for waste battery recycling comprising:

    injecting a raw material;
    heating the injected the raw material;
    cooling a heat-treated product; and
    discharging a cooled reactant,
    wherein the heating the raw material comprises:

        preheating the injected raw material and
        high temperature heat treatment for heating at a higher temperature than the preheating, and
        heat treatment of the raw material is performed at a temperature range of 1,150 to 1,400 °C in the high temperature heat treatment.

21. The heat treatment method for waste battery recycling of claim 20, wherein:
    the high temperature heat treatment comprises:

heat-absorbing for heating at a higher temperature than the preheating; and
smelting for forming a smelting portion that forms at least a part of a melt layer by heating at a temperature range higher than the heat absorbing.

22. The heat treatment method for waste battery recycling of claim 20, wherein:

in the heating the raw material,
when a temperature at an arbitrary position in a minor axis direction and a major axis direction with reference to a center portion in a cross-section of a furnace, which is a heat applying member is measured, a temperature difference between the center portion and the arbitrary position is 250 °C or less.

23. The heat treatment method for waste battery recycling of claim 20, wherein:
a length ratio of the major axis to the minor axis of the cross-section of the heating furnace is 2/1 to 4/1.

24. The heat treatment method for waste battery recycling of claim 20, wherein:
the heating furnace comprises a bent portion at an outer side of the heating furnace.

25. The heat treatment method for waste battery recycling of claim 24, wherein:
a length of the bent portion is 60 mm or more.

26. The heat treatment method for waste battery recycling of claim 20, wherein:
the preheating the injected the raw material is performed at a target temperature of Equation 1:

<Equation 1>

$$T_{111} \geq 0.813(x/(Cp \times m) + 25)$$

(in Equation 1, x denotes injected energy [W], Cp denotes a specific heat [J/Kg- °C], and m is a material transfer amount [Kg/s])

27. The heat treatment method for waste battery recycling of claim 21, wherein:
a target temperature in the smelting for forming the at least a part of the melt layer by heating at a temperature range higher than the heat absorbing satisfies Equation 2:

<Equation 2>

$$T_{113} \geq 0.4(x/(Cp \times m) + 700)$$

(in Equation 2, x denotes injected energy [W], Cp denotes a specific heat [J/Kg- °C], and m is a material transfer amount [Kg/s])

# FIG. 1A

Gas exhaust
Inject
Initial shape of shred
Preheating section
High heat reaction section
Cooling section
Discharge

10
100
110_F
110_H
111
112
110
113
110_H'
120
130

T
V
M
M

# FIG. 1B

Input raw material

100

110_F   110_H   110_H'

10'

111   112   113   120

110

130

FIG. 2A

FIG. 2B

FIG. 2C

# FIG. 2D

Mass. Data: 1-203-2021Mar17_1_Theta_2-Theta
A, C, 00-041-1487
S. LiF, 01-071-3743
D, Ni, 01-077-8461
F, Li2CO3, 00-022-1141
G, LiOH, 01-076-0911
H, Li5AlO4, 01-070-0432
Z, LiAlO2, 01-073-1338
P, NiO, 01-078-4367

# FIG. 3A

# FIG. 3B

FIG. 3C

# FIG. 3D

Temperature distribution at edges when temperature increase 10 °C/min or more

FIG. 4

# FIG. 5

Y
(Minor axis in furnace)

Coil

Heating element

T(X,Y)

O
Furnace center

X
(Major axis in furnace)

# FIG. 6

# FIG. 7

# FIG. 8A

Temperature deviation decrease tendency according to corner round size

$y = 0.0141x^2 - 2.5789x + 321$

Corner round value (mm)

Temperature difference between edge and center (°C)

FIG. 8B

# FIG. 9A

Heat treatment section

Coil section

Outer edge region

Central region

Outer edge region

Position

Average temperature in furnace (℃)

EP 4 640 856 A1

# FIG. 9B

# FIG. 9C

Charge shred

Preheating heating

Heat-absorbing portion

Smelting portion

Cooling portion

Reactant

Position

700 1350~1400

Average temperature in furnace (℃)

**INTERNATIONAL SEARCH REPORT**

| International application No. |
|---|
| **PCT/KR2023/019932** |

| A. | CLASSIFICATION OF SUBJECT MATTER |
|---|---|

**C22B 4/08**(2006.01)i; **C22B 1/02**(2006.01)i; **C22B 7/00**(2006.01)i; **C22B 1/26**(2006.01)i; **C22B 5/02**(2006.01)i; **H01M 10/54**(2006.01)i

According to International Patent Classification (IPC) or to both national classification and IPC

| B. | FIELDS SEARCHED |
|---|---|

Minimum documentation searched (classification system followed by classification symbols)

C22B 4/08(2006.01); B09B 3/00(2006.01); C01D 15/02(2006.01); C01F 7/02(2006.01); C22B 26/12(2006.01); C22B 5/10(2006.01); C22B 5/12(2006.01); C22B 7/00(2006.01); H01M 10/54(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐배터리(waste battery), 재활용(recycling), 가열(heating), 냉각 (cooling), 예비 열처리(preheating), 고온 열처리(high temperature heating)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 08-041554 A (OGIHARA K.K.) 13 February 1996 (1996-02-13)<br>See paragraphs [0013], [0017]-[0021] and [0024]-[0029] and figures 1 and 2. | 1-8,13-16,18,<br>20-23,26,27 |
| Y | | 9-12,17,19,24,25 |
| Y | KR 10-2013-0069538 A (SGL CARBON SE) 26 June 2013 (2013-06-26)<br>See paragraphs [0046] and [0050] and figure 1. | 9-12,24,25 |
| Y | KR 10-2014-0024417 A (ECOLOOP GMBH) 28 February 2014 (2014-02-28)<br>See paragraph [0037], claims 1 and 11 and figure 1. | 17,19 |
| A | WO 2022-019172 A1 (SUMITOMO METAL MINING CO., LTD.) 27 January 2022 (2022-01-27)<br>See paragraphs [0079]-[0088], claims 1, 2 and 14 and figures 1 and 3. | 1-27 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 March 2024** | **05 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/019932**

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0036287 A (LG CHEM, LTD.) 02 April 2021 (2021-04-02)<br>See claims 1-3, 8 and 9. | 1-27 |

Form PCT/ISA/210 (second sheet) (July 2022)

**INTERNATIONAL SEARCH REPORT**
Information on patent family members

International application No.

**PCT/KR2023/019932**

| Patent document cited in search report | | | Publication date (day/month/year) | Patent family member(s) | | | Publication date (day/month/year) |
|---|---|---|---|---|---|---|---|
| JP | 08-041554 | A | 13 February 1996 | CA | 2154936 | A1 | 30 January 1996 |
| | | | | CN | 1127792 | A | 31 July 1996 |
| | | | | EP | 0694623 | A2 | 31 January 1996 |
| | | | | JP | 08-127826 | A | 21 May 1996 |
| | | | | JP | 08-134556 | A | 28 May 1996 |
| | | | | JP | 0841554 | A | 13 February 1996 |
| | | | | JP | 3552118 | B2 | 11 August 2004 |
| | | | | KR | 10-1996-0003815 | A | 23 February 1996 |
| | | | | US | 5735933 | A | 07 April 1998 |
| KR | 10-2013-0069538 | A | 26 June 2013 | BR | 112012008785 | A2 | 24 September 2019 |
| | | | | CA | 2776574 | A1 | 21 April 2011 |
| | | | | DE | 102009049423 | A1 | 28 April 2011 |
| | | | | EP | 2601323 | A1 | 12 June 2013 |
| | | | | IN | 3114DEN2012 | A | 18 September 2015 |
| | | | | JP | 2013-527306 | A | 27 June 2013 |
| | | | | MX | 2012004359 | A | 23 July 2012 |
| | | | | RU | 2012119547 | A | 20 November 2013 |
| | | | | US | 2012-0247005 | A1 | 04 October 2012 |
| | | | | WO | 2011-045431 | A1 | 21 April 2011 |
| | | | | WO | 2011-045431 | A8 | 12 September 2013 |
| KR | 10-2014-0024417 | A | 28 February 2014 | AU | 2012-252809 | A1 | 05 December 2013 |
| | | | | BR | 112013028324 | A2 | 10 January 2017 |
| | | | | CA | 2835166 | A1 | 15 November 2012 |
| | | | | CN | 103534368 | A | 22 January 2014 |
| | | | | DE | 102011100995 | A1 | 15 November 2012 |
| | | | | EP | 2707517 | A1 | 19 March 2014 |
| | | | | JP | 2014-513215 | A | 29 May 2014 |
| | | | | JP | 5815124 | B2 | 17 November 2015 |
| | | | | RU | 2013154483 | A | 20 June 2015 |
| | | | | UA | 108436 | C2 | 27 April 2015 |
| | | | | US | 2014-0090518 | A1 | 03 April 2014 |
| | | | | US | 9322077 | B2 | 26 April 2016 |
| | | | | WO | 2012-152408 | A1 | 15 November 2012 |
| WO | 2022-019172 | A1 | 27 January 2022 | AU | 2021-311179 | A1 | 09 March 2023 |
| | | | | CA | 3185251 | A1 | 27 January 2022 |
| | | | | CN | 115836139 | A | 21 March 2023 |
| | | | | EP | 4186604 | A1 | 31 May 2023 |
| | | | | JP | WO2022-019172 | A1 | 27 January 2022 |
| | | | | KR | 10-2023-0015444 | A | 31 January 2023 |
| | | | | US | 2023-0250508 | A1 | 10 August 2023 |
| KR | 10-2021-0036287 | A | 02 April 2021 | CN | 114930612 | A | 19 August 2022 |
| | | | | JP | 2022-547698 | A | 15 November 2022 |
| | | | | JP | 7371237 | B2 | 30 October 2023 |
| | | | | US | 2022-0302515 | A1 | 22 September 2022 |
| | | | | WO | 2021-060873 | A1 | 01 April 2021 |

Form PCT/ISA/210 (patent family annex) (July 2022)